# EUROPEAN PATENT SPECIFICATION

(11) **EP 2 930 422 B1**
(45) Date of publication and mention of the grant of the patent: **15.06.2016**
(21) Application number: 14163867.6
(22) Date of filing: 08.04.2014
(51) Int. Cl.: F22B 1/00, F01K 7/18, F01K 7/20

(54) **Method to operate a steam turbine, steam turbine and concentrated solar power plant**
Verfahren zum Betreiben einer Dampfturbine, Dampfturbine und konzentriertes Solarkraftwerk
Procédé pour faire fonctionner une turbine à vapeur, turbine à vapeur et centrale à énergie solaire concentrée

(43) Date of publication of application: 14.10.2015
(73) Proprietor: Siemens Aktiengesellschaft, 80333 München (DE)
(72) Inventor: Schill, Stefan Olov, 61246 Finspong (SE)

(56) References cited:
- EP-A1- 2 644 848
- JP-A- S6 415 407
- US-A1- 2013 312 410

## Description

The present invention is related to a method to operate a steam turbine, the steam turbine comprising at least a first turbine module with a first stage and at least one second stage, wherein the stages are successively arranged in the flow direction of the steam, a main inlet for channelling steam to the first stage and a bypass arranged parallel to the main inlet for channelling steam to the at least one second stage. Similar arrangements are disclosed in US2013/0312410, JP56415407 and EP2644848. Further, the invention is related to a steam turbine comprising at least a first turbine module with a first stage and at least one second stage, wherein the stages are successively arranged in the flow direction of the steam, a main inlet for channelling steam to the first stage and a bypass arranged parallel to the main inlet for channelling steam to the at least one second stage. Additionally, the invention is related to a concentrated solar power plant.

Steam turbines and respective methods to operate such steam turbines are known for a long time. The usage of such steam turbines in concentrated solar power plants is also well established. Such steam turbine work best, while the characteristic features of the used steam, especially the temperature of the steam, comprise constant values in an optimum range for the operation of the steam turbine. Steam turbines known in the state of the art usually can accept only a certain temperature gradient of the temperature of the steam, typically 3 K/min. Larger temperature gradients or even jumps in the temperature of the steam can cause damages that could result in extra maintenance costs and/or a reduction of the lifetime of the steam turbine. Especially in a thermal concentrated solar power plant one challenge is that the heat input from the sun is very dependent on how clear the sky is. Some clouds could rapidly give a considerable reduction of the heat input and when the clouds disappear there is a corresponding rapid increase of the heat input. This do not only have an impact on the produced steam flow but also and especially on the steam temperature. Rapid changes of the heat input do in itself impose considerable difficulties to control the steam temperatures.

It is known in the state of the art, to partly solve these problems by trying to damping out the steam temperature variations using supplementary firing and/or using different types of heat storages for a buffering of the heat. This increases the complexity of the steam generating system used to generate steam for the steam turbine and is often not sufficient to reach a constant steam temperature. Alternatively or additionally it is also known to provide limiters and protections in a control system of the steam turbine and/or the steam generating system. These solutions have the drawback that the limiters can reduce the steam turbine load and the protections can cause a trip of the steam turbine, if the load reduction is not sufficient to keep the steam turbine within acceptable operating conditions. It also can be necessary to make compromises when designing a steam turbine especially for concentrated solar power plant applications and similar. Such compromises can lead to rather many constraints that limit the operation and reduce the revenue for the plant owners.

It is an object of the present invention to solve the aforesaid problems at least partly. In particular, it is an object of the present invention to provide a method to operate a steam turbine, a steam turbine and a concentrated solar power plant, which allow in an easy and cost-efficient way the operation of a steam turbine with steam which can possess large temperature fluctuations.

The aforesaid problems are solved by a method to operate a steam turbine according to independent claim 1, by a steam turbine according to claim 6 and a concentrated solar power plant according to claim 11. Further features and details of the present invention result from the subclaims, the description and the drawings. Features and details discussed with respect to the method can also be applied to the steam turbine and/or the concentrated solar power plant and vice versa, if of technical sense.

According to a first aspect of the invention, the afore cited object is achieved by a method to operate a steam turbine, the steam turbine comprising at least a first turbine module with a first stage and at least a second stage, wherein the stages are successively arranged in the flow direction of the steam, a main inlet for channelling steam to the first stage and a bypass arranged parallel to the main inlet for channelling steam to the at least one second stage. A method according to the invention is characterized by the following steps:
a) measuring the temperature of the steam upstream of the turbine module,
b) deciding, depending on the measured temperature, whether a first operation mode or a second operation mode is to be used during the operation of the steam turbine, wherein in the first operation mode the first stage and the at least one second stage are used for an expansion of steam and in the second operation mode only the at least one second stage is used for the expansion of steam and
c) channelling steam into the according stage(s) for expansion according to the chosen operation mode.

A method according to the invention can be used to operate a steam turbine comprising at least a first turbine module. Such a turbine module can be for instance a high pressure, an intermediate pressure or a low pressure turbine module. The at least first turbine module comprises a first stage and at least one second stage. The stages are successively arranged in the flow direction of the steam, which means that the steam can flow from the first stage of the turbine module into the at least one second stage of the turbine module. A respective blading of the different stages can be preferably adapted for different characteristical features of the steam.

When flowing through the turbine module the steam is expanded and thereby cooled. Therefore, the features of the steam are changing when flowing through the turbine module. The temperature is decreasing and at the same time the steam can become more saturated and therefore moisture can show up. To adapt the turbine blading to this conditions the blading of the first stage can be adapted to high temperature steam and the blading of the second stage can be adapted to handle steam with a high level of moisture. This often causes, that in return the blading of the first stage is not well adapted to steam with high level of moisture and the blading of the second stage is not well adapted to high temperature steam respectively. The steam turbine further comprises a main inlet at the beginning of the first stage and a bypass which is arranged parallel to the main inlet. Both, the main inlet and the bypass can be connected to a feeding pipe of the steam turbine. Of course at least one shutoff valve can be placed preferably in this feeding pipe, preferably upstream both of the main inlet and of the bypass. If the main inlet is used for channelling steam into the turbine module, the steam enters the turbine module at the first stage, if the bypass is used, the steam enters the turbine module at the second stage and the first stage is bypassed.

According to the invention, the steam turbine can be operated in two modes which are chosen according to the measured temperature. Therefore, in step a) the temperature of the steam is measured. This temperature measurement takes place upstream of the turbine module, using a temperature sensor for instance placed at a feeding pipe of the steam turbine. Preferably the steam temperature is measured near the turbine module to avoid differences in the temperature of the steam between the measurement point, where the temperature sensor is positioned, and the turbine module. In a second step b) a decision is made depending on the measured temperature which operation mode is to be used during the operation of the steam turbine. This decision can be made in a control unit of the steam turbine using for instance a comparison of the measured temperature value with a control value. This control value can be for instance a value of the steam temperature between 200°C and 600°C, preferably between 300°C and 400°C. Another alternative of additional possibility is that a gradient of a change of the measured temperature is calculated and in the following compared to a control value. A control value in this embodiment can vary between 2 K/min and 15 K/min, preferably between 3 K/min and 6 K/min. The exact chosen temperature value and/or gradient value as control value depend on the design of the turbine module, especially on the design of the blading of the first and second stage respectively. In the first operation mode the first stage and the at least one second stage of the turbine module are used for an expansion of steam during the operation of the turbine module. This means, that the main inlet is used to channel steam into the turbine module, beginning at the first stage. After the expansion of steam in the first stage, the steam flows into the second stage, where a successive further expansion of the steam takes place. In the second mode the bypass is used to channel steam only to the second stage of the turbine module and the first stage is bypassed and not or at least essentially not used for an expansion of the steam. This has the advantage, that steam with a high temperature can be channelled to the first stage, which preferably comprises a blading which can handle these high temperatures. After an expansion in the first stage, the steam comprises a lower temperature and is successively channelled to the second stage. Steam with an initial lower temperature and therefore with a high level of moisture can be channelled directly into the second stage, whose blading is preferably more moisture-resistant than the blading of the first stage. If the decision which mode is to be used is carried out with a comparison of the measured temperature value with a control value, the control value can be chosen as such, that if the measured temperature is higher than the control value, the first operation mode is used and if the temperature is lower than the control value, the second operation mode is used for the operation of the steam turbine. According to the made decision in step b) in the next step c) the steam is channelled into the according stage(s) of the turbine module. This channelling of the steam can of course comprise an activation of valves and/or gates and can preferably be carried out by the control unit.

A method according to the invention can of course be transferred to a steam turbine with more than one turbine module and/or to a turbine module with two or more second stages. A method according to the invention has the advantage that temperature stress due to a large fluctuation of steam temperature in the module of the steam turbine can be avoided. For high temperature steam the first stage of the steam turbine comprising a high temperature adapted blading can be used and for low temperature steam the moisture adapted blading in the second stage can be used directly and at the same time the not moisture adapted blading of the first stage can be bypassed and conserved. All in all a better performance of the steam turbine can be achieved. Especially due to the reason that low temperature steam, which comprises a high level of moisture, are not channelled to the first stage for expansion, whose blading is not adapted to this high level of moisture and will be severely stressed by the moisture, a longer lifetime of the steam turbine can be achieved. Additionally, the method according to the invention allows a power plant with a steam turbine, which is less complex because the need for supplementary firing and/or heat storages for buffering heat in the steam generating system of the power plant can be reduced.

Further, a method to operate a steam turbine according to the invention can be characterized in that in step a) the temperature of the steam is measured at or near a bifurcation of a feeding pipe of the steam turbine to the main inlet and the bypass of the first turbine module. Near the bifurcation according to the invention also includes the positioning of the temperature measurement at the feeding pipe of the steam turbine somewhat before the bifurcation to the main inlet and the bypass but still close to the steam turbine. The main inlet is positioned at the beginning of the first stage and is used to channel steam into the first stage. The bypass is positioned at the beginning of the at least one second stage and is used to channel steam into the at least one second stage. The temperature of the steam is the decisive factor to take the decision in step b) of the method according to the invention. Measuring the temperature at or near the bifurcation ensures that the value of the temperature does not or at least not significantly differ between the measuring point and the stages of the turbine module essentially used for an expansion of the steam. A very reliable decision, especially regarding an opening and/or closing of the bypass, can therefore be made, based on this temperature measurement.

Additionally, a method to operate a steam turbine according to the invention can be characterized in that step c) includes an opening or closing of a bypass valve in the bypass or at the beginning of the bypass. Such a bypass valve can be included in the bypass itself and/or at the bifurcation between the bypass and the main inlet and/or can be a gate which closes the main inlet. Especially, such a bypass valve can include a complete closing of the steam passage to the first stage of the turbine module. Such valves are a very easy way to control the flow of steam in a steam turbine. By opening and closing such a valve, the steam can be channelled into the chosen stage(s) of the turbine module in a very easy and cost-efficient way.

In a further embodiment of the method to operate a steam turbine according to the invention, it can be provided, that while the second operation mode is chosen, cooling steam is channelled through the first stage to cool the first stage. As just the at least one second stage of the steam turbine is used for the essential expansion during the second operation mode, the first stage is bypassed. Therefore it is possible, that this first stage can be overheated due to ventilation losses. This is due to the fact that, when switching to the second operation mode, the first stage is no longer used for expanding steam but still the rotor of the first stage rotates driven by the second stage. Therefore, instead of converting heat into work, it can occur that the first stage converts work into heat. Without cooling, this can lead to a too high temperature in the material in the first stage and/or to a high level of thermal stress induced in the first stage, especially in the blading of the first stage. In addition, the system effectiveness of the whole steam turbine can be lowered. By channelling a cooling steam, especially a small amount of cooling steam, through the first stage during the second operation mode such a danger of overheating of the first stage can be avoided. The thermal stress for the first stage can therefore be reduced. Preferably a small amount of the steam channelled to the second stage can be used as cooling steam. A control valve in the main inlet can preferably be comprised for this task.

In a further advanced development of a method according to the invention, the cooling steam is preheated. This is especially advantageous, inasmuch the steam can show large variation in temperature. After a large step in temperature and especially after an according switching of the first operation mode into the second operation mode, the temperature difference between the cooling steam, which is preferably taken from the main steam flow of the steam turbine, and the first stage of the turbine module, which is still at the temperature before the temperature drop, can be too large. By preheating the cooling steam this temperature difference can be reduced and therefore the thermal stress applied to the first stage of the turbine module can be further reduced.

According to a second aspect of the invention, the object of the invention is solved by a steam turbine comprising at least a first turbine module with a first stage and at least one second stage, wherein the stages are successively arranged in the flow direction of the steam, a main inlet for channelling steam to the first stage and a bypass arranged parallel to the main inlet for channelling steam to the at least one second stage. A steam turbine according to the invention is characterized in that the steam turbine is enabled to perform a method according to the first aspect of the invention. Therefore, a steam turbine according to the invention provides the same advantages which have been discussed in detail according to a method to operate a steam turbine according to the first aspect of the invention. Especially, the steam turbine can be operated depending on the temperature of the steam, whereby at a high temperature of the steam the steam is channelled to the first stage via the main inlet and successively after the first stage to the second stage, and at a low temperature of the steam the steam is directly channelled to the second stage of the turbine module of the steam turbine. In this second operation mode, the first stage is bypassed. This has the advantage that, for instance, the blading of the first stage, which is adapted to high temperatures but not adapted to steam with a high level of moisture, is especially used for high temperature steam and a usage of this first stage for low temperature steam, which automatically shows a high level of moisture, can be avoided. To be enabled to perform a method according to the first aspect of the invention, a steam turbine according to the invention can of course comprise a temperature sensor, especially placed at a feeding pipe of the steam turbine, preferably placed at or near the main inlet of the first turbine module. Further, also stacked solutions with more than two stages in the first turbine module are possible, whereby the more than two stages are also arranged successively in the flow direction of the steam and can be provided with steam using bypasses respectively. A steam turbine according to the invention can therefore be used with steam, which comprises a large temperature variation. The temperature variation can be both large in absolute values and in the gradient of the temperature change. All in all, with a steam turbine according to the invention a better performance can be reached and such a steam turbine provides a reduced need for maintenance and a longer lifetime.

In addition, a steam turbine according to the invention can be characterized in that the steam turbine comprises a control unit, the control unit enabled to perform a method according to the first aspect of the invention. Such a control unit as a central element of the steam turbine is an especially easy way to carry out a method according to the first aspect of the invention. The control unit can be enabled to perform the temperature measurement, for instance by the activation of a temperature sensor, the decision taking and the activation and controlling of the channelling of the steam. Especially not further element is needed to perform a method according to the first aspect of the invention.

In a further advanced arrangement of a steam turbine according to the invention, the first turbine module comprises a bypass valve arranged in the bypass or at the beginning of the bypass. Such a bypass valve can be included in the bypass and/or at the bifurcation between the bypass and the main inlet and/or can be built as a gate which closes the main inlet. Especially in the last embodiment such a bypass valve can induce a complete closing of a steam passage to the first stage. Such bypass valves are a very easy way to control the flow of steam in a steam turbine and are low in cost and complexity.

Further, a steam turbine according to the invention can be characterized in that a swallowing capacity of the bypass is larger than the swallowing capacity of the main inlet. Such an increase of the swallowing capacity, when using the bypass in the second operation mode, can be advantageous because it allows compensating at least partly the shorter expansion range with a certain increase of the steam flow. Thereby, a drop in the power output of the turbine module can be minimized. Of course, the swallowing capacity of the bypass includes the swallowing capacity of the bypass valve. The power output of a turbine module and a steam turbine respectively can therefore be enhanced.

In a further advanced arrangement of a steam turbine according to the invention the steam turbine comprises at least two modules, each module with a first stage and at least one second stage, a main inlet for channelling steam to the first stage and a bypass arranged parallel to the main inlet for channelling steam to the at least one second stage, wherein in each respective module the stages are successively arranged in the flow direction of the steam, and wherein each module can be used to perform a method according to the first aspect of the invention. With each of the modules of the steam turbine all the advantages already described in detail with a method according to the first aspect of the invention can be achieved. For an execution of the method according to the first aspect of the invention, for all of the modules a single combined control unit can be provided. Of course, a respective control unit for each of the modules can also be provided. During the operation of the steam turbine each module can independently perform a method according to the first aspect of the invention and therefore provide the advantages described in detail above. A further gain in performance of the steam turbine according to the invention can be achieved. Also a stacked solution is of course possible with more than two stages per module and/or more than two modules. A wide application possibility of a steam turbine according to the invention is therefore possible.

According to a third aspect of the invention, the object of the invention is solved by a concentrated solar power plant comprising a steam turbine. A concentrated solar power plant according to the invention is characterized in that the steam turbine is constructed according to the second aspect of the invention.. All advantages, which have been discussed in detail according to a steam turbine according to the second aspect of the invention, are therefore also provided by a concentrated solar power plant comprising such a steam turbine. Further, a steam turbine according to the second aspect of the invention is enabled to perform a method according to the first aspect of the invention. All advantages, which have been discussed in detail according to the method to operate a steam turbine according to the first aspect of the invention, are therefore likewise provided by a concentrated solar power plant comprising such a steam turbine.

The present invention is described with respect to the accompanied figures. The figures show schematically:
- Figure 1: a first embodiment of a concentrated solar power plant according to the invention and
- Figure 2: a second embodiment of a concentrated solar power plant according to the invention.

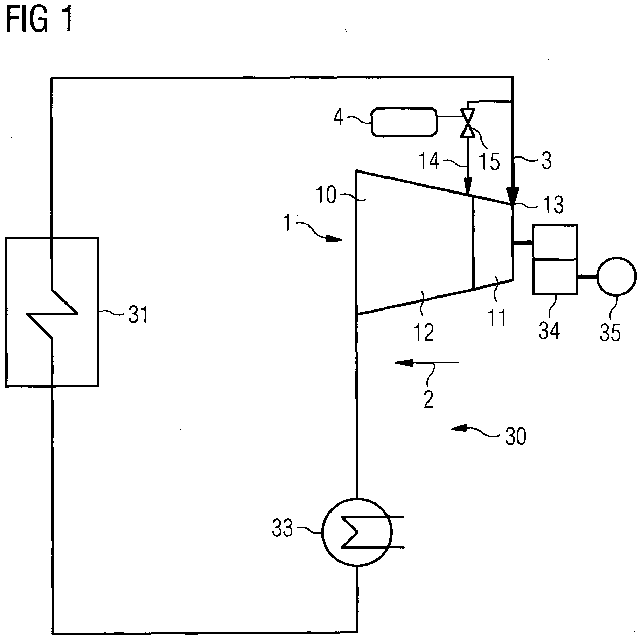

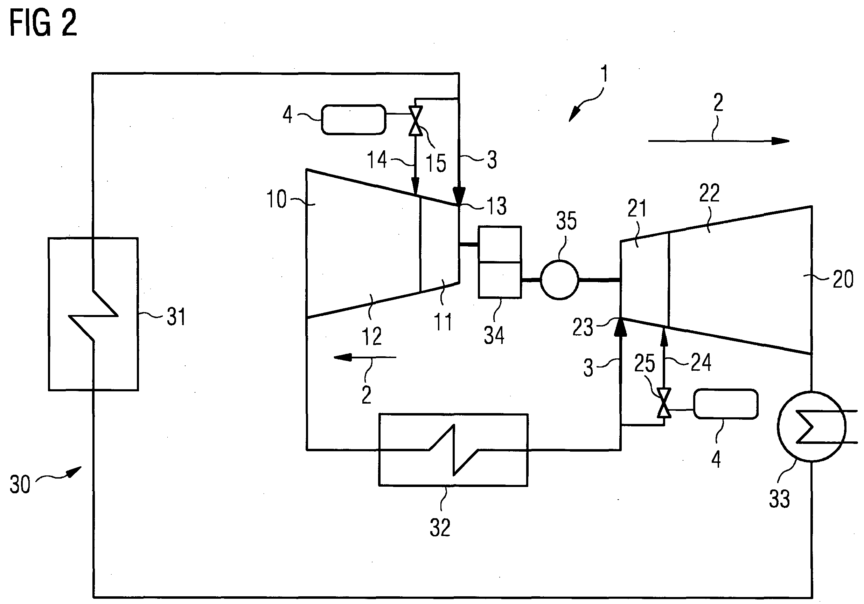

Elements having the same functions and mode of action are provided in fig. 1 and 2 with the same reference signs.

Fig. 1 shows a possible embodiment of a concentrated solar power plant 30 according to the invention. A steam generator 31, in which the heat input from the sun is used to generate steam, is shown. The steam is led to a steam turbine 1, which comprises in this embodiment a single turbine module 10. In this embodiment, the steam turbine 1 is connected via a gear 34 with a generator 35 to generate electrical power. Of course there are other embodiments of steam turbines 1 according to the invention which do not comprise such gear 34. The turbine module 10 comprises two stages 11, 12 which are successively arranged in the flow direction 2 of the steam. Preferably, the blading of the different stages 11, 12 are adapted to the expected features of the steam in these stages 11, 12. Preferably, the blading of the first stage 11 is adapted to high temperature steam and the blading of the second stage 12 is adapted to a steam with a lower temperature and therefore with a high level of moisture. Accordingly the blading of the first stage 11 is not suited well for low temperature steam with a high level of moisture and the blading of the second stage 12 cannot take high steam temperatures. A feeding pipe 3 of the steam turbine 1 is split into a main inlet 13 and a bypass 14. The bypass 14 can be controlled by a bypass valve 15. Using the main inlet 13 steam is channelled into the first stage 11, using the bypass 14 steam can be directly channelled into the second stage 12. Of course also the main inlet 13 can comprise a control valve (not shown) to control the amount of steam channelled through the main inlet 13. In addition, also a shutoff valve (not shown) can be arranged preferably upstream of the bifurcation to the main inlet 13 and the bypass 14 in the feeding pipe 3 to provide the possibility to completely shut down the flow through the steam turbine 1. In the shown embodiment a control unit 4 is provided to control the bypass valve 15 and preferably all other valves mentioned above. The control unit 4 is also enabled to receive the measurements of a temperature sensor (not shown), which is located preferably somewhat before the bifurcation of the feeding pipe 3 to the main inlet 13 and the bypass 14 and provides the temperature value of the steam. The control unit 4 compares this measured temperature value with a control value and takes the decision, whether a first or a second operation mode of the steam turbine 1 should be used in the operation of the steam turbine 1. If a temperature of the steam higher than the control value is measured, the control unit 4 decides to use the first operation mode, in which steam is channelled exclusively via the main inlet 13 into the first stage 11. In the first stage 11 the steam is expanded and therefore cooled. Afterwards it is channelled to the successively arranged second stage 12. If the initial temperature value is smaller than the control value, the control unit 4 switches to the second operation mode and activates the bypass valve 15 to channel steam directly and preferably exclusively into the second stage 12 of the first turbine module 10 of the steam turbine 1. Therefore, it is possible to use the first stage 11, whose blading is adapted to high temperature, low moisture steam, only if these conditions are present and to use the second stage 12, which is adapted to low temperature, high moisture steam, if these conditions are present. In the second operation mode the first stage 11 is essentially not used for the expansion of steam. Nevertheless, a small amount of cooling steam can still be channelled through the first stage 11, preferably controlled by the bypass 14 and/or a control valve (not shown) in the main inlet 13, to reduce the temperature and the thermal stress induced by the ventilation losses. These ventilation losses can occur due to the fact that the blading of the first stage 11 is still rotating driven by the second stage 12. If no cooling of the first stage is present, the first stage can even convert the work stored in this rotation into heat. Preferably a small amount of steam out of the steam in the bypass is taken for the cooling steam. For a further reduction of the thermal stress the small amount of cooling steam can also be reheated. The heating can be done using stored heat, electricity or by burning fuel. Of course this heating can be controlled by additional valves (not shown). This additional heating is especially advantageous in case of a very large and/or fast reduction of the steam temperature. After the second stage 12 of the first turbine module 10 of the steam turbine 1 the steam is channelled through a condenser 33 and after that again in the steam generator 31. The circular flow of the concentrated solar power plant 30 can be continued.

In fig. 2 another embodiment of a concentrated solar power plant 30 according to the invention is shown. The steam turbine 1 in this embodiment of the concentrated solar power plant 30 comprises a first turbine module 10 and a second turbine module 20. The first turbine module 10 complies with the turbine module 10 already described according to fig. 1. The second turbine module 20 also comprises a first stage 21 and a second stage 22, which are successively arranged in the flow direction 2 of the steam. Into the first stage 21 steam can be channelled via a main inlet 23, into the second stage 22 steam can be channelled via a bypass 24. In the bypass 24 a second bypass valve 25 is arranged, which can be operated via a second control unit 4. Of course the second turbine module 20 can also comprise additional valves (not shown) as mentioned according to the turbine module 10 already described according to fig. 1. Between the two turbine modules 10, 20 a reheater 32 of the concentrated solar power plant 30 is arranged. In this reheater 32 the temperature of the steam coming from the second stage 12 of the first turbine module 10 can be increased and channelled afterwards to the second turbine module 20. Also the second turbine module 20 is enabled to perform a method to operate the steam turbine 1 according to the invention. Therefore, the temperature of the incoming steam after the reheater 32 is measured. According to the temperature value the first 21 and the second stage 22 is used for the expansion of the steam or only the second stage 22 is used for the expansion of the steam. The first operation mode, in which both stages 21, 22 are used, is chosen, if the value of the steam temperature is above a certain control value and the second mode in which only the second stage 22 of the second turbine module 20 is used for the expansion of the steam is chosen, if the value of the steam temperature is below a certain control value. In the second operation mode, of course also a small amount of cooling steam can be channelled through the first stage 21 to reduce the thermal stress induced by ventilation losses. In the shown embodiment of the concentrated solar power plant 30, two control units 4 are shown. Of course, also only a single combined control unit 4 can be provided. In addition, the steam turbine 1 in the shown embodiment comprises two turbine modules 10, 20 with two stages 11, 12, 21, 22 each. Naturally, steam turbines 1 with more than two modules 10, 20 and modules with more than two stages 11, 12, 21, 22 respectively are also possible.

Summing up a concentrated solar power plant according to the invention and a steam turbine according to the invention respectively, which are both enabled to perform a method according to the invention, allow the usage of steam, which shows a large variability in temperature. Due to the fact, that the stages in the turbine modules used for the expansion of the steam are chosen dependently on the temperature of the steam, the necessity for supplementary firing and/or using buffering with heat storages of heat for the steam in the steam generating system of the concentrated solar power plant can be reduced. The whole machinery can therefore be constructed in a more easily and less complex way, which leads to a reduction in cost both in construction and in maintenance.

## Claims

1. Method to operate a steam turbine (1), the steam turbine (1) comprising at least a first turbine module (10) with a first stage (11) and at least one second stage (12), wherein the stages (11, 12) are successively arranged in the flow direction (2) of the steam, a main inlet (13) for channelling steam to the first stage (11) and a bypass (14) arranged parallel to the main inlet (13) for channelling steam to the at least one second stage (12),
**characterized by following steps:**
a) measuring the temperature of the steam upstream of the turbine module (10),
b) deciding depending on the measured temperature, whether a first operation mode or a second operation mode is to be used during the operation of the steam turbine (1), wherein in the first operation mode the first stage (11) and the at least one second stage (12) are used for an expansion of steam and in the second operation mode only the at least one second stage (12) is used for the expansion of steam and
c) channelling steam into the according stage(s) (11, 12) for expansion according to the chosen operation mode.

2. Method to operate a steam turbine (1) according to claim 1,
**characterized in that**
in step a) the temperature of the steam is measured at or near a bifurcation of a feeding pipe (3) of the steam turbine (1) to the main inlet (13) and the bypass (14) of the first turbine module (10).

3. Method to operate a steam turbine (1) according to claim 1 or 2,
**characterized in that**
step c) includes an opening or closing of a bypass valve (15) in the bypass (14) or at the beginning of the bypass (14).

4. Method to operate a steam turbine (1) according to one of the preceding claims,
**characterized in that**
while the second operation mode is chosen, cooling steam is channelled through the first stage (11) to cool the first stage (11).

5. Method to operate a steam turbine (1) according to claim 4,
**characterized in that**
the cooling steam is preheated.

6. Steam turbine (1) comprising a temperature sensor and at least a first turbine module (10) with a first stage (11) and at least one second stage (12), wherein the stages (11, 12) are successively arranged in the flow direction (2) of the steam, a main inlet (13) for channelling steam to the first stage (11) and a bypass (14) arranged parallel to the main inlet (13) for channelling steam to the at least one second stage (12),
**characterized in that**
the steam turbine (1) is enabled to perform a method according to one of the preceding claims.

7. Steam turbine (1) according to claim 6,
**characterized in that**
the steam turbine (1) comprises a control unit (4), the control unit (4) enabled to perform a method according to one of the preceding claims 1 to 5.

8. Steam turbine (1) according to one of the claims 6 or 7, **characterized in that**
the first turbine module (10) comprises a bypass valve (15) arranged in the bypass (14) or at the beginning of the bypass (14).

9. Steam turbine (1) according to one of the claims 6 to 8, **characterized in that**
a swallowing capacity of the bypass (14) is larger than the swallowing capacity of the main inlet (13).

10. Steam turbine (1) according to one of the claims 6 to 9, **characterized in that**
the steam turbine (1) comprises at least two modules (10, 20), each module (10, 20) with a first stage (11, 21) and at least one second stage (12, 22), a main inlet (13, 23) for channelling steam to the first stage (11, 21) and a bypass (14, 24) arranged parallel to the main inlet (13, 23) for channelling steam to the at least one second stage (12, 22), wherein in each respective module (10, 20) the stages (11, 12)(21, 22) are successively arranged in the flow direction (2) of the steam, and wherein each module (10, 20) can be used to perform a method according to one of the preceding claims 1 to 5.

11. Concentrated solar power plant (30) comprising a steam turbine (1),
**characterized in that**
the steam turbine (1) is constructed according to one of the claims 6 to 10.

## Patentansprüche

1. Verfahren zum Betreiben einer Dampfturbine (1), die zumindest ein erstes Turbinenmodul (10) mit einer ersten Stufe (11) und mindestens einer zweiten Stufe (12) umfasst, wobei die Stufen (11, 12) in Strömungsrichtung (2) des Dampfes nacheinander angeordnet sind, einen Haupteinlass (13) zum Leiten von Dampf zur ersten Stufe (11) und einen parallel zum Haupteinlass (13) angeordneten Bypass (14) zum Leiten von Dampf zu der mindestens einen zweiten Stufe (12), **gekennzeichnet durch** folgende Schritte:
a) Messen der Temperatur des Dampfes stromaufwärts vor dem Turbinenmodul (10),
b) Entscheiden in Abhängigkeit von der gemessenen Temperatur, ob während des Betriebs der Dampfturbine (1) ein erster oder ein zweiter Betriebsmodus benutzt werden soll, wobei im ersten Betriebsmodus die erste Stufe (11) und die mindestens eine zweite Stufe (12) zum Expandieren von Dampf benutzt werden und im zweiten Betriebsmodus nur die mindestens eine zweite Stufe (12) zum Expandieren von Dampf benutzt wird, und
c) Leiten von Dampf in die entsprechende(n) Stufe(n) (11, 12) zum Expandieren entsprechend dem gewählten Betriebsmodus.

2. Verfahren zum Betreiben einer Dampfturbine (1) nach Anspruch 1,
**dadurch gekennzeichnet, dass**
in Schritt a) die Temperatur des Dampfes an oder in der Nähe einer Verzweigung eines Speiserohrs (3) der Dampfturbine (1) zum Haupteinlass (13) und zum Bypass (14) des ersten Turbinenmoduls (10) gemessen wird.

3. Verfahren zum Betreiben einer Dampfturbine (1) nach Anspruch 1 oder 2,
**dadurch gekennzeichnet, dass**
Schritt c) ein Öffnen oder Schließen eines Bypassventils (15) in dem Bypass oder am Anfang des Bypasses (14) umfasst.

4. Verfahren zum Betreiben einer Dampfturbine (1) nach einem der vorhergehenden Ansprüche,
**dadurch gekennzeichnet, dass**
zum Kühlen der ersten Stufe (11) Kühldampf durch die erste Stufe (11) geleitet wird, wenn der zweite Betriebsmodus gewählt ist.

5. Verfahren zum Betreiben einer Dampfturbine (1) nach Anspruch 4,
**dadurch gekennzeichnet, dass**
der Kühldampf vorgewärmt wird.

6. Dampfturbine (1), die einen Temperatursensor und zumindest ein erstes Turbinenmodul (10) mit einer ersten Stufe (11) und mindestens einer zweiten Stufe (12) umfasst, wobei die Stufen (11, 12) in Strömungsrichtung (2) des Dampfes nacheinander angeordnet sind, einen Haupteinlass (13) zum Leiten von Dampf zur ersten Stufe (11) und einen parallel zum Haupteinlass (13) angeordneten Bypass (14) zum Leiten von Dampf zu der mindestens einen zweiten Stufe (12),
**dadurch gekennzeichnet, dass**
die Dampfturbine (1) in der Lage ist, ein Verfahren nach einem der vorhergehenden Ansprüche auszuführen.

7. Dampfturbine (1) nach Anspruch 6,
**dadurch gekennzeichnet, dass**
die Dampfturbine (1) eine Steuereinheit (4) umfasst, wobei die Steuereinheit (4) in der Lage ist, ein Verfahren nach einem der vorhergehenden Ansprüche 1 bis 5 auszuführen.

8. Dampfturbine (1) nach einem der Ansprüche 6 und 7,
**dadurch gekennzeichnet, dass**
das erste Turbinenmodul (10) ein Bypassventil (15) umfasst, das in dem Bypass oder am Anfang des Bypasses (14) angeordnet ist.

9. Dampfturbine (1) nach einem der Ansprüche 6 bis 8, **dadurch gekennzeichnet, dass**
ein Schluckvolumen des Bypasses (14) größer ist als das des Haupteinlasses (13).

10. Dampfturbine (1) nach einem der Ansprüche 6 bis 9, **dadurch gekennzeichnet, dass**
die Dampfturbine (1) mindestens zwei Module (10, 20) umfasst, wobei jedes Modul (10, 20) eine erste Stufe (11, 21) und mindestens eine zweite Stufe (12, 22) aufweist, einen Haupteinlass (13, 23) zum Leiten von Dampf zur ersten Stufe (11, 21) und einen parallel zum Haupteinlass (13, 23) angeordneten Bypass (14, 24) zum Leiten von Dampf zu der mindestens einen zweiten Stufe (12, 22), wobei in jedem jeweiligen Modul (10, 20) die Stufen (11, 12) (21, 22) in Strömungsrichtung (2) des Dampfes nacheinander angeordnet sind und jedes Modul (10, 20) zum Ausführen eines Verfahrens nach einem der vorhergehenden Ansprüche 1 bis 5 benutzt werden kann.

11. Solarthermisches Kraftwerk (30) mit einer Dampfturbine (1),
**dadurch gekennzeichnet, dass**
die Dampfturbine (1) nach einem der Ansprüche 6 bis 10 konstruiert ist.

## Revendications

1. Procédé pour faire fonctionner une turbine à vapeur (1), la turbine à vapeur (1) comprenant au moins un premier module de turbine (10) avec un premier étage (11) et au moins un deuxième étage (12), dans lequel les étages (11, 12) sont agencés successivement dans la direction de circulation (2) de la vapeur, une admission principale (13) destinée à acheminer de la vapeur vers le premier étage (11) et une dérivation (14) agencée parallèlement à l'admission principale (13) destinée à acheminer de la vapeur vers l'au moins un deuxième étage (12), **caractérisé par** les étapes suivantes :
a) mesurer la température de la vapeur en amont du module de turbine (10),
b) décider en fonction de la température mesurée si un premier mode de fonctionnement ou un deuxième mode de fonctionnement doit être utilisé pendant le fonctionnement de la turbine à vapeur (1), dans lequel dans le premier mode de fonctionnement le premier étage (11) et l'au moins un deuxième étage (12) sont utilisés pour une dilatation de la vapeur et dans le deuxième mode de fonctionnement seul l'au moins un deuxième étage (12) est utilisé pour la dilatation de la vapeur et
c) acheminer de la vapeur dans le ou les étages concernés (11, 12) pour une dilatation selon le mode de fonctionnement choisi.

2. Procédé pour faire fonctionner une turbine à vapeur (1) selon la revendication 1,
**caractérisé en ce que**
la température de la vapeur à l'étape a) est mesurée au niveau ou près d'une bifurcation d'un tuyau d'alimentation (3) de la turbine à vapeur (1) vers l'admission principale (13) et la dérivation (14) du premier module de turbine (10).

3. Procédé pour faire fonctionner une turbine à vapeur (1) selon la revendication 1 ou 2,
**caractérisé en ce que**
l'étape c) comprend une ouverture ou une fermeture d'une soupape de dérivation (15) dans la dérivation (14) ou au début de la dérivation (14).

4. Procédé pour faire fonctionner une turbine à vapeur selon l'une des revendications précédentes,
**caractérisé en ce que**
tandis que le deuxième mode de fonctionnement est choisi, un courant de refroidissement est acheminé à travers le premier étage (11) pour refroidir le premier étage (11).

5. Procédé pour faire fonctionner une turbine à vapeur (1) selon la revendication 4,
**caractérisé en ce que**
le courant de refroidissement est préchauffé.

6. Turbine à vapeur (1) comprenant un capteur de température et au moins un premier module de turbine (10) avec un premier étage (11) et au moins un deuxième étage (12), dans laquelle les étages (11, 12) sont agencés successivement dans la direction de circulation (2) de la vapeur, une admission principale (13) destinée à acheminer de la vapeur vers le premier étage (11) et une dérivation (14) agencée parallèlement à l'admission principale (13) pour acheminer de la vapeur vers l'au moins un deuxième étage (12),
**caractérisée en ce que**
la turbine à vapeur (1) est activée pour exécuter un procédé selon l'une des revendications précédentes.

7. Turbine à vapeur (1) selon la revendication 6, **caractérisée en ce que**
la turbine à vapeur (1) comprend une unité de commande (4), l'unité de commande (4) est activée pour exécuter un procédé selon l'une des revendications précédentes 1 à 5.

8. Turbine à vapeur (1) selon l'une des revendications 6 ou 7,
**caractérisée en ce que**
le premier module de turbine (10) comprend une soupape de dérivation (15) agencée dans la dérivation (14) ou au début de la dérivation (14).

9. Turbine à vapeur (1) selon l'une des revendications 6 à 8, **caractérisée en ce qu'**
une capacité d'absorption de la dérivation (14) est plus grande que la capacité d'absorption de l'admission principale (13).

10. Turbine à vapeur (1) selon l'une des revendications 6 à 9, **caractérisée en ce que**
la turbine à vapeur (1) comprend au moins deux modules (10, 20), chaque module (10, 20) avec un premier étage (11, 21) et au moins un deuxième étage (12, 22), une admission principale (13, 23) destinée à acheminer de la vapeur vers le premier étage (11, 21) et une dérivation (14, 24) agencée parallèlement à l'admission principale (13, 23) destinée à acheminer de la vapeur vers l'au moins un deuxième étage (12, 22), dans laquelle dans chaque module respectif (10, 20) les étages (11, 12) (21, 22) sont agencés successivement dans la direction de circulation (2) de la vapeur, et dans laquelle chaque module (10, 20) peut être utilisé pour exécuter un procédé selon l'une des revendications précédentes 1 à 5.

11. Centrale à énergie solaire concentrée (30) comprenant une turbine à vapeur (1),
**caractérisée en ce que**
la turbine à vapeur (1) est construite selon l'une des revendications 6 à 10.
